# EUROPEAN PATENT APPLICATION

(11) **EP 3 231 855 A1**
(43) Date of publication of application: **18.10.2017**
(21) Application number: 15867684.1
(22) Date of filing: 09.11.2015
(51) Int. Cl.: C10L 5/00, C10L 5/04, C10L 9/10, C10L 9/08

(54) **METHOD FOR PRODUCING SOLID FUEL AND APPARATUS FOR PRODUCING SOLID FUEL**

(30) Priority: 08.12.2014 JP 2014248405
(71) Applicant: Kabushiki Kaisha Kobe Seiko Sho (Kobe Steel, Ltd.), Kobe-shi, Hyogo 651-8585 (JP)
(72) Inventor: KINOSHITA, Shigeru, Hyogo 676-8670, (JP); TAKAHASHI, Yoichi, Hyogo 676-8670, (JP)
(74) Representative: Müller-Boré & Partner Patentanwälte PartG mbB
(86) International application number: PCT/JP2015/081503
(87) International publication number: WO 2016/093001

(57) **Abstract**

To provide a method for producing a solid fuel that can efficiently evaporate moisture contained in a slurry by enhancing heat exchange efficiency.

The method for producing a solid fuel of the present invention includes the steps of: preparing a slurry by mixing powdery low-grade coal and oil; evaporating moisture contained in the slurry by heating; and separating the slurry obtained after the evaporation step into solid and liquid, wherein the

evaporation step includes the steps of: preheating the slurry in a first circulation route; and heating the preheated slurry in a second circulation route that is different from the first circulation route. Preferably, in the preheating step and the heating step, a multitubular heat exchanger is used, the heating medium is supplied to the shell side, and the slurry is supplied to the tube side. Preferably, the process steam generated in the evaporation step is used as the heating medium for any one of the preheating step and the heating step, and externally introduced steam is used as the heat medium for the other.

## Description

### Technical Field

The present invention relates to a method for producing a solid fuel and an apparatus for producing a solid fuel.

### Background Art

Conventionally, solid fuels are utilized as fuel for thermal power generation and the like. In Japan, bituminous coal is widely used as such a solid fuel. However, since production of bituminous coal has increased year by year, there is a concern about its depletion at present. In place of this, the effective use of low-grade coal as a fuel has become an urgent task.

However, the low-grade coal has a low heating value and additionally might spontaneously combust, thus requiring strict processes for its use. In this regard, some processes for modifying low-grade coal have been proposed for its effective utilization. However, most of these processes require high manufacturing costs for equipment, as their processing conditions include high temperature and high pressure. In addition, such processes must bear the burden of processing wastewater that contain many pyrolysis substances which accompany the chemical reactions of low-grade coals, and thereby are difficult to put into practical use.

To solve those problems, the applicants have proposed a modified brown-coal process as means for effectively using low-grade coal. One example of a reference describing the modified brown-coal process is JP 2776278 B1, titled "Solid Fuel Using Porous Carbon as raw material and Method for Manufacturing the same". The manufacturing method for a solid fuel as mentioned in this patent document includes the steps of: mixing porous coal and oil to produce a raw material slurry; dehydrating the porous coal by heating the raw material slurry; and separating the dehydrated slurry into a solid and a liquid. The manufacturing method for a solid fuel involves promoting dehydration of porous coal by heating the raw material slurry in a preheater and an evaporator provided in the same route. Particularly, this manufacturing method is characterized by compressing process steam generated in the evaporator by the use of a compressor, and then sequentially utilizing the process steam as a heating medium for the evaporator and the preheater.

Meanwhile, the manufacturing method for a solid fuel is configured to include evaporation of all of a raw material slurry through the evaporator, and for this reason, the temperature of an outlet side of the evaporator needs to be kept at or above a certain level. Such a manufacturing method for a solid fuel needs to keep the temperature of the raw material slurry supplied to the evaporator at or above the certain level in advance, and also needs to increase the temperature of the process steam to be supplied to the evaporator. Thus, the manufacturing method for a solid fuel is likely to result in a small difference in the temperature between the raw material slurry and the process steam in the evaporator. Consequently, the manufacturing method for a solid fuel might lead to a low heat exchange efficiency and could not utilize the exhaust heat sufficiently.

### Prior Art Document

### Patent Document

Patent Document 1: JP 2776278 A

### Disclosure of the Invention

### Problems to be Solved by the Invention

The present invention has been made in light of these circumstances, and it is an object of the present invention to provide a method for producing a solid fuel and an apparatus for producing a solid fuel, that can efficiently evaporate moisture contained in a slurry by enhancing heat exchange efficiency.

### Means for Solving the Problems

The invention made to solve the foregoing problems is directed to a method for producing a solid fuel, which includes the steps of: preparing a slurry by mixing powdery low-grade coal and oil; evaporating moisture contained in the slurry by heating; and separating the slurry obtained after the evaporation step into solid and liquid, wherein the evaporation step includes the steps of: preheating the slurry in a first circulation route; and heating the preheated slurry in a second circulation route that is different from the first circulation route.

The method for producing a solid fuel includes the step of preheating the slurry in the first circulation route and the step of heating the reheated slurry in the second circulation route that is different from the first circulation route. Thus, the slurry is preheated in the first circulation route, while the slurry obtained after the preheating can be heated in the second circulation route independently of the preheating in the first circulation route. That is, in the method for producing a solid fuel, a part of the slurry is evaporated in the first circulation route, while preventing all of the slurry from passing through the second circulation route, thereby making it possible to promote the optimization of the heat exchange efficiency in respective circulation routes. Thus, the method for producing a solid fuel can effectively evaporate moisture contained in the slurry.

Preferably, in the preheating step and the heating step, a multitubular heat exchanger is used, a heating medium is supplied to a shell side, and the slurry is supplied to a tube side. In this way, in the preheating step and the heating step, a multitubular heat exchanger is used, the heating medium is supplied to the shell side, and the slurry is supplied to the tube side, thereby making it possible to easily and surely preheat and heat the slurry.

Preferably, process steam generated in the evaporation step is used as the heating medium for any one of the preheating step and the heating step, and externally introduced steam is used as a heat medium for the other. In this way, the process steam generated in the evaporation step is used as the heating medium for any one of the preheating step and the heating step, thereby enabling the effective use of the exhaust heat. The process steam is used as the heating medium for any one of the preheating step and the heating step, and the externally introduced steam is used as the heat medium for the other, thus making it possible to easily and surely enhance the heat exchange rate in the respective circulation routes. With this arrangement, even when the amount of the generated process steam is decreased due to an operating trouble or the like, the reduction in the evaporation rate of moisture contained in the slurry can be suppressed because the externally introduced steam is used as the other heating medium.

Preferably, the heating medium in the preheating step is the process steam, and the heating medium in the heating step is the externally introduced steam. Thus, the process steam is used as the heating medium in the preheating step, while the externally introduced steam is used as the heating medium in the heating step, thereby making it possible to easily and surely enhance the heat exchange efficiency between the slurry and the process steam in the preheating step. That is, the slurry supplied at a certain level of temperature in the preheating step exchanges heat with the process steam, thereby making it possible to efficiently preheat the slurry and promoting condensation of the process steam. Thus, the heat exchange rate of the process steam in the preheating step can be enhanced to effectively utilize exhaust heat.

Preferably, the process steam is used as the heating medium in the preheating step, and the externally introduced steam is used as the heating medium in the heating step, while the process steam is compressed. Thus, by compressing the process steam, the heat exchange rate between the slurry and the process steam in the preheating step can be further enhanced to more effectively utilize exhaust heat.

Another invention made to solve the foregoing problems is directed to an apparatus for producing a solid fuel, including: a slurry preparation tank for mixing powdery low-grade coal and oil; a plurality of heaters for evaporating moisture contained in the slurry; and a solid-liquid separator that removes a liquid from the slurry obtained after the evaporation of the moisture, wherein the plurality of heaters includes a first heat exchanger for preheating the slurry in a first circulation route and a second heat exchanger for heating the preheated slurry in a second circulation route that is different from the first circulation route.

The apparatus for producing a solid fuel includes the first heat exchange for preheating the slurry in the first circulation route and the second heat exchanger for heating the preheated slurry in the second circulation route that is different from the first circulation route. Thus, the slurry is preheated in the circulation route, while the preheated slurry can be heated in the second circulation route, independently of the preheating in the first circulation route. That is, in the apparatus for producing a solid fuel, a part of the slurry is evaporated in the first circulation route, while preventing all of the slurry from passing through the second circulation route, thereby making it possible to promote the optimization of the heat exchange efficiency in respective circulation routes. Thus, the apparatus for producing the solid fuel can effectively evaporate moisture contained in the slurry.

Preferably, the apparatus for producing a solid fuel further includes a separation tank for separating process steam from the heated slurry and a route for supplying the process steam from the separation tank to the first heat exchanger or the second heat exchanger. Thus, the apparatus for producing a solid fuel further includes the separation tank for separating the process steam from the heated slurry and the route for supplying the process steam from the separation tank to the first heat exchanger or the second heat exchanger, thereby enabling the effective use of the exhaust heat. This arrangement can enhance the heat exchange rate between the process steam and the slurry, while precisely controlling the amount of heat in the process steam.

"low-grade coal" as used in the present invention means a coal containing a large amount of moisture and desired to be dehydrated, for example, a coal containing 20% or more by mass of moisture on a dry basis.

### Effects of the Invention

As mentioned above, the method for producing a solid fuel and the apparatus for producing a solid fuel of the present invention can effectively evaporate moisture contained in the slurry by enhancing the heat exchange efficiency.

### Brief Description of the Drawings

Fig. 1 is a schematic diagram showing an apparatus for producing a solid fuel according to first embodiment of the present invention.
Fig. 2 is a schematic diagram showing an apparatus for producing a solid fuel according to another embodiment, unlike the apparatus for producing for solid fuel shown in Fig. 1.

### Mode for Carrying Out the Invention

Embodiments of the present invention will be described in detail below with reference to the accompanying drawings.

### [First Embodiment]

### <Apparatus for Producing Solid Fuel>

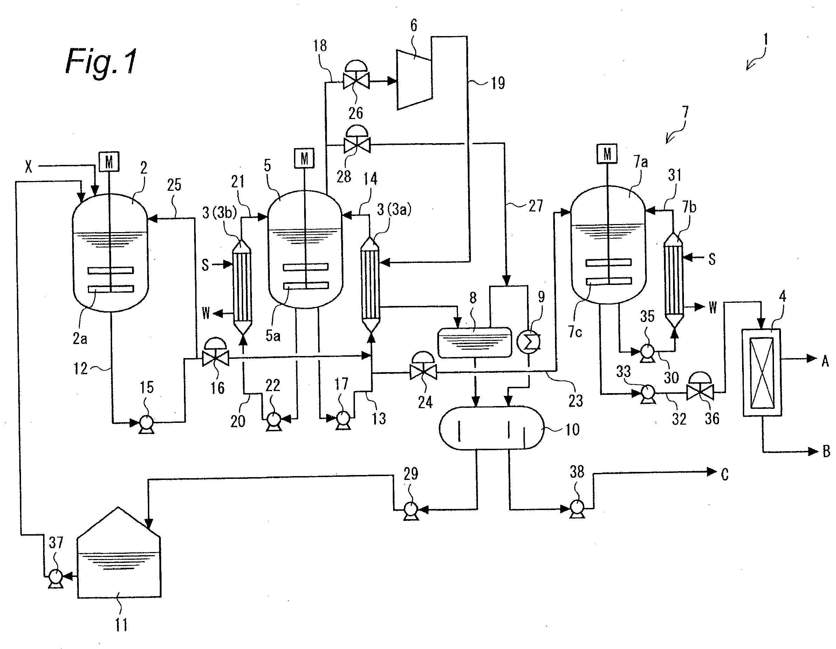

An apparatus 1 for producing a solid fuel shown in Fig. 1 mainly includes a slurry preparation tank 2, a plurality of heaters 3, and a solid-liquid separator 4. The apparatus 1 for producing a solid fuel includes a separation tank 5, a compressor 6, a superheater 7, a condensate reservoir 8, a condenser 9, an oil-water separator 10, and a tank 11. The separation tank 5 separates process steam from a slurry heated by the heater 3. The compressor 6 compresses the process steam separated by the separation tank 5. The superheater 7 maintains and promotes the heated state of the slurry heated by the heater 3. The condensate reservoir 8 receives a condensate liquid generated by the heater 3. The condenser 9 condenses a part of the process steam separated by the separation tank 5. The oil-water separator 10 separates the condensate liquid supplied from the condensate reservoir 8 or the condenser 9 into oil and water. The tank 11 stores therein oil separated by the oil-water separator 10.

### (Slurry Preparation Tank)

The slurry preparation tank 2 prepares the slurry by mixing powdery low-grade coal X and oil. The type of the slurry preparation tank 2 is not particularly limited, but typically is an axial flow stirrer that includes a stirrer 2a. "powdery" as used herein means, for example, the state in which the ratio of the mass of low-grade coals having a grain size of less than 1 mm to the total mass of low-grade coals is 80% or more. "grain size" as used herein means a value determined by measurement in conformity with dry sieving specified by Test sieving-General requirements of JIS-Z-8815 (1994).

The above-mentioned low-grade coal is no particularly limited. Examples of the low-grade coal include brown coal, lignite and subbituminous coal. Examples of the brown coal include Victoria coal, North Dakota coal, and Berga coal. Examples of the subbituminous coal include West Banco coal, Binungan coal, Samarangau coal and the like.

The above-mentioned oil is not particularly limited as long as the oil can extract nonvolatile components from the low-grade coal and can dissolves heavy oil and/or the above nonvolatile component to lower the viscosity thereof. Among them, light oil is preferable as the above-mentioned oil because it exhibits excellent affinity with heavy oil and nonvolatile components, handleability of a prepared slurry, easy penetration into pores of the low-grade coal, and the like. Further, petroleum-based oil that has a boiling point of 100°C or higher and 400°C or lower is more preferable in terms of the stability at a moisture evaporating temperature. Examples of the petroleum-based oil include kerosene, light oil and heavy oil, among which kerosene is preferred.

The nonvolatile components means nonvolatile oils inherently contained in the low-grade coal. The nonvolatile components are extracted by the oil mixed in the slurry preparation tank 2 and then cover the outer surfaces of of the low-grade coal and the inner surfaces of the pores, contributing to preventing spontaneous combustion of the low-grade coal. Examples of such a nonvolatile component include aromatic polymer organic compounds.

The heavy oil is, for example, a heavy component that does not substantially exhibit vapor pressure even at 400°C, or oil containing such a heavy component. Like the above-mentioned nonvolatile component, the heavy oil covers active points within the pores of the low-grade coal, contributing to preventing spontaneous combustion of the low-grade coal. Examples of such heavy oil include natural asphalt, aliphatic polymer organic compounds, and aromatic polymer organic compounds.

### (Heater)

The plurality of heaters 3 evaporates moisture contained in the slurry. The plurality of heaters 3 includes a first heat exchanger 3a that preheats the slurry in a first circulation route, and a second heat exchanger 3b that heats the slurry preheated by the first heat exchanger 3a in a second circulation route that is different from the first circulation route.

The first heat exchanger 3a is a multitubular heat exchanger. One end on the tube side of the first heat exchanger 3a is connected to the bottom of the slurry preparation tank 2 by pipes 12 and 13. One end on the tube side of the first heat exchanger 3a is also connected to the bottom of the separation tank 5 by the pipe 13. The other end on the tube side of the first heat exchanger 3a is connected to an upper part of the side wall of the separation tank 5 by a pipe 14. The above-mentioned first circulation route is formed by the first heat exchanger 3a, the pipe 14 that connects the other end on the tube side of the first heat exchanger 3a with the upper part of the sidewall of the separation tank 5, the separation tank 5, and the pipe 13 that connects the bottom of the separation tank 5 with one end on the tube side in the first heat exchanger 3a.

The first heat exchanger 3a causes the slurry supplied from the slurry preparation tank 2 to be introduced thereinto from one end on the tube side, and supplies the preheated slurry to the separation tank 5 through the pipe 14 that is connected to the other end on the tube side. The slurry prepared by the slurry preparation tank 2 is pressure-fed to the first heat exchanger 3a by a pump 15 disposed in a pipe 12. The introduction amount of the slurry introduced from the slurry preparation tank 2 into the first heat exchanger 3a is adjusted by a control valve 16 disposed in the pipe 12. The slurry to be supplied to the separation tank 5 is introduced into the first heat exchanger 3a from one end on the tube side by a pump 17 disposed in the pipe 13 on the side of one end. The pipe 12 for connecting the slurry preparation tank 2 with the first heat exchanger 3a is connected to a pipe 25 connected to the upper part of the side wall of the slurry preparation tank 2 on the upstream side of the control valve 16. Thus, a part of the slurry fed from the slurry preparation tank 2 is refluxed within the slurry preparation tank 2 through the pipe 25 in accordance with the regulation of the flow rate by the control valve 16.

The first heat exchanger 3a allows process steam, which is to be recovered from the upper part of the separation tank 5, to be introduced thereinto as a heating medium from one end on the shell side. Concurrently, the first heat exchanger 3a discharges a condensate liquid of process steam generated by heat exchange with the slurry introduced into the tube side, from the other end on the shell side into the condensate reservoir 8. Specifically, an upper part of the separation tank 5 is connected to one end on the shell side of the first heat exchanger 3a by pipes 18 and 19. With this arrangement, the process steam separated by the separation tank 5 is introduced from one end on the shell side through the pipes 18 and 19. The pipes 18 and 19 define a route for supplying the process steam from the separation tank 5 to the first heat exchanger 3a.

In addition to the slurry supplied from the slurry preparation tank 2, the first heat exchanger 3a allows the slurry supplied from the separation tank 5 to be introduced thereinto from one end on the tube side, thereby appropriately increasing the temperature of the slurry introduced from the one end on the tube side. Thus, the first heat exchanger 3a can sufficiently increase the temperature of the slurry by heat exchanger with the process steam. Consequently, the first heat exchanger 3a supplies a part of the slurry to the separation tank 5 through the pipe 14 that connects the other end on the tube side with the upper part of the side wall of the separation tank 5, and thereby enables the part of the slurry to be evaporated within the separation tank 5.

The second heat exchanger 3b is a multitubular heat exchanger. One end on the tube side of the second heat exchanger 3b is also connected to the bottom of the separation tank 5 by a pipe 20. The other end on the tube side of the second heat exchanger 3b is also connected to the upper part of the side wall of the separation tank 5 by a pipe 21. The above-mentioned second circulation route is formed by the second heat exchanger 3b, the pipe 21 that connects the other end on the tube side of the second heat exchanger 3b with the upper part of the sidewall of the separation tank 5, the separation tank 5, and the pipe 20 that connects the bottom of the separation tank 5 with one end on the tube side in the second heat exchanger 3b.

The second heat exchanger 3b allows the slurry, which is to be supplied to the separation tank 5, to be introduced thereinto from one end on the tube side by a pump 22 disposed in the pipe 20. The second heat exchanger 3b supplies the heated slurry to the separation tank 5 from the other end on the tube side through the pipe 21 that connects the other end on the tube side with the upper part of the side wall of the separation tank 5.

The second heat exchanger 3b allows externally introduced steam S, which is to be introduced from the outside, to be introduced thereinto from one end on the shell side, and discharges condensed water W generated after heat exchange with the slurry from the other end on the shell side to the outside of the system.

The second heat exchanger 3b allows the slurry supplied from the separation tank 5 to be introduced thereinto from one end on the tube side, thereby sufficiently increasing the temperature of the slurry introduced from the one end on the tube side by heat exchange with the externally introduced steam S. Consequently, the second heat exchanger 3b supplies the slurry to the separation tank 5 through the pipe 21, and thereby enables the slurry to be sufficiently evaporated within the separation tank 5.

### (Separation Tank)

The separation tank 5 allows for introduction of the preheated slurry fed from the other end on the tube side of the first heat exchanger 3a, as well as the heated slurry fed from the other end on the tube side of the second heat exchanger 3b, from an upper part of the side wall. The separation tank 5 separates process steam from the slurry introduced thereinto from the first heat exchanger 3a and the second heat exchanger 3b, and then supplies the process steam to the compressor 6 through the pipe 18. Furthermore, the separation tank 5 supplies a part of the slurry separated from the process steam, to the first heat exchanger 3a from the bottom of. The separation tank 5 supplies a part of the slurry separated from the process steam, to the second heat exchanger 3b from the bottom. Furthermore, the separation tank 5 supplies a part of the slurry separated from the process steam, to the superheater 7 from the first circulation route through the pipes 13 and 23. Note that the separation tank 5 is provided with a stirrer 5a. By the stirrer 5a, the slurry is stirred within the separation tank 5. The supply amount of the slurry supplied from the separation tank 5 to the superheater 7 is adjusted by a control valve 24 disposed in a pipe 23 while taking into consideration the level of a liquid surface within the separation tank 5.

### (Compressor)

The compressor 6 pressurizes the process steam supplied from the separation tank 5. The compressor 6 has an inlet side connected to an upper wall of the separation tank 5 by the pipe 18, and an outlet side connected to one end on the shell side of the first heat exchanger 3a by the pipe 19. The process steam (hereinafter also referred to as "compressed process steam") pressurized by the compressor 6 is introduced into one end on the shell side of the first heat exchanger 3a through the pipe 19, and then exchanges heat with the slurry introduced from one end on the tube side of the first heat exchanger 3a.

The supply volume of the process steam from the separation tank 5 into the compressor 6 can be adjusted by a first pressure control valve 26 and a second pressure control valve 28. The first pressure control valve 26 is disposed in the pipe 18 that connects the separation tank 5 with the compressor 6. The second pressure control valve 28 is disposed in a pipe 27 that connects the separation tank 5 with the condenser 9 while bypassing the compressor 6.

### (Superheater)

The superheater 7 has a superheating tank 7a and a third heat exchanger 7b which is a multitubular heat exchanger. The superheater 7 prevents a decrease in the temperature of the slurry after evaporation of the moisture supplied from the separation tank 5 (hereinafter referred to as a "dehydrated slurry") and concurrently promotes the dehydration of the dehydrated slurry, furthermore, adjusts the supply amount of the dehydrated slurry to be supplied to a solid-liquid separator 4.

The superheating tank 7a allows the dehydrated slurry supplied from the separation tank 5 through the pipes 13 and 23 to be introduced thereinto. The superheating tank 7a supplies a part of the dehydrated slurry to the third heat exchanger 7b through the pipe 30 that connects the bottom of the superheating tank to one end on the tube side of the third heat exchanger 7b. The superheating tank 7a allows the dehydrated slurry fed from the other end on the tube side of the third heat exchanger 7b after the heat exchange to be introduced from an upper part of the side wall through a pipe 31. The bottom of the superheating tank 7a is connected to the solid-liquid separator 4 by a pipe 32. The superheating tank 7a supplies a part of the dehydrated slurry to the solid-liquid separator 4 by a pump 33 disposed in the pipe 32. The supply amount of the dehydrated slurry from the superheating tank 7a to the solid-liquid separator 4 is adjusted by a control valve 36. The superheating tank 7a is provided with a stirrer 7c. By the stirrer 7c, the dehydrated slurry is stirred within the superheating tank 7a.

The third heat exchanger 7b allows the dehydrated slurry supplied from the superheating tank 7a to be introduced thereinto from one end on the tube side, furthermore, supplies the dehydrated slurry after the heat exchange from the other end on the tube side to the superheating tank 7a. The third heat exchanger 7b allows externally introduced steam S, which is to be introduced from the outside, to be introduced thereinto from one end on the shell side, and discharges condensed water W generated after heat exchange with the dehydrated slurry from the other end on the shell side to the outside of the system. The dehydrated slurry within the superheating tank 7a is pressure-fed toward one end on the tube side of the third heat exchanger 6b by a pump 35 disposed in a pipe 30.

### (Solid-Liquid Separator)

The solid-liquid separator 4 removes liquid from the dehydrated slurry. In detail, the solid-liquid separator 4 separates oil A from the dehydrated slurry supplied from the superheating tank 7a. The solid-liquid separator 4 separates the oil A from the dehydrated slurry, thereby producing a solid B (cake). An example of the solid-liquid separator 4 is a centrifugal separator that separates the dehydrate slurry into solid and oil by a centrifugal separation method. Other examples of the solid-liquid separator 4 can include a settler, a filter, and a press.

Note that the apparatus 1 for producing a solid fuel may further include a dryer (not shown) for evaporating oil contained in the solid B, separated by the solid-liquid separator 4. The apparatus 1 for producing a solid fuel that is equipped with such a dryer enables evaporation of the oil contained in the solid B, thus producing a powdery solid fuel. In the drying, the outer surfaces of the low-grade coal and the inner surfaces of the pores thereof can be covered with the nonvolatile component, thus producing the powdery solid fuel that is prevented from spontaneously combusting.

The apparatus 1 for producing a solid fuel may further include a compression molding machine (not shown) for compressing and molding the powdery solid fuel obtained in this way. Examples of the compression molding machine include a tableting machine (tableting), and a double roll molding machine (roll press).

### <Method for Producing Solid Fuel>

A method for producing a solid fuel will be described below. A method using the apparatus 1 for producing a solid fuel shown in Fig. 1 will be described. The method for producing a solid fuel includes the steps of: preparing a slurry by mixing powdery low-grade coal and oil; evaporating moisture contained in the slurry by heating; and separating the slurry obtained after the evaporation into solid and liquid.

### (Slurry Preparation Step)

The slurry preparation step is performed using the slurry preparation tank 2. The low-grade coal and oil used in the slurry preparation step are the same as those used in the apparatus 1 for producing a solid fuel shown in Fig. 1.

### (Evaporation Step)

The evaporation step includes the steps of: preheating the slurry in the first circulation route; and heating the preheated slurry in a second circulation route that is different from the first circulation route. The evaporation step is performed using the plurality of heaters 3 and the separator 4.

### (Preheating Step)

In the preheating step, the above-mentioned slurry mixed in the slurry preparation step and the slurry fed from the bottom of the separation tank 5 through the pipe 13 are introduced into the first heat exchanger 3a from one end on the tube side of the first heat exchanger 3a and supplied from the other end on the tube side to the separation tank 5. Concurrently, in the preheating step, a heating medium is introduced into the first heat exchanger 3a from one end on the shell side and condensed by the heat exchange with the slurry to produce the condensate liquid, which is then discharged from the other end on the shell side. The heating medium in use introduced into one end on the shell side of the first heat exchanger 3b is process steam supplied thereto from the upper part of the separation tank 5 through the pipes 18 and 19. In detail, the above process steam in use introduced into one end on the shell side of the first heat exchanger 3b is a compressed process steam that is compressed by the compressor 6 coupled to the pipes 18 and 19.

In the preheating step, in addition to the slurry mixed in the slurry preparation step, the slurry supplied from the bottom of the separation tank 5 is introduced into the first heat exchanger 3a from one end on the tube side of the first heat exchanger 3a, thereby appropriately increasing the temperature of the slurry introduced from the one end on the tube side. Thus, in the preheating step, the temperature of the slurry can be sufficiently enhanced by heat exchange between the slurry and the process steam. Consequently, a part of the slurry preheated in the preheating step evaporates within the separation tank 5.

The lower limit of the supply temperature of the slurry to the first heat exchanger 3a is preferably 60°C, more preferably 63°C, and further preferably 65°C. The upper limit of the supply temperature of the slurry to the first heat exchanger 3a is preferably 90°C, more preferably 85°C, and further preferably 80°C. When the supply temperature of the slurry to the first heat exchanger 3a is lower than the lower limit, the temperature of the slurry might not be increased sufficiently by the heat exchanger with the process steam. Conversely, when the supply temperature of the slurry to the first heat exchanger 3a is higher than the upper limit, the amount of heat exchange at the heat exchanger 3a cannot be increased, so that the heat of the process steam might not be sufficiently supplied to the slurry. As a result, the process steam might be wasted without being condensed while holding latent heat. When the supply temperature of the slurry to the first heat exchanger 3a is higher than the upper limit, the slurry might evaporate before being supplied to the first heat exchanger 3a, thereby causing the occurrence of clogging of the pipe 13.

The lower limit of the pressure of the compressed process steam is preferably 0.5 MPaG, more preferably 0.53 MPaG, and further preferably 0.55 MPaG. On the other hand, the upper limit of the pressure of the compressed process steam is preferably 0. 65 MPaG, more preferably 0.62 MPaG, and further preferably 0. 6 MPaG. When the pressure of the compressed process steam is less than the lower limit, the process steam might not sufficiently exchange heat with the slurry introduced from one end on the tube side of the first heat exchanger 3a. Conversely, when the pressure of the compressed process steam exceeds the upper limit, the equipment and operating costs might increase.

The lower limit of the temperature of the compressed process steam is preferably 185°C, and more preferably 190°C. On the other hand, the upper limit of the temperature of the compressed process steam is preferably 205°C, and more preferably 200°C. When the temperature of the compressed process steam is lower than the lower limit, the process steam might not sufficiently exchange heat with the slurry introduced from one end on the tube side of the first heat exchanger 3a. Conversely, when the temperature of the compressed process steam is higher than the upper limit, the equipment and operating costs might increase.

Note that in the preheating step, the condensate liquid discharged from the other end on the shell side of the first heat exchanger 3a is fed to the condensate reservoir 8 and then supplied to the oil-water separator 10. The oil separated by the oil-water separator 10 may be pressure-fed to the tank 11 by the pump 29, pressure-fed to the slurry preparation tank 2 by a pump 37, and then reused for the slurry preparation step. On the other hand, moisture separated by the oil-water separator 10 is disposed of as wastewater C by a pump 38.

### (Heating Step)

In the heating step, the above-mentioned slurry supplied from the bottom of the separation tank 5 is introduced into the second heat exchanger 3b from one end on the tube side of the second heat exchanger 3b, and supplied from the other end on the tube side to the separation tank 5. Concurrently, in the heating step, a heating medium is introduced into the second heat exchanger 3b from one end on the shell side of the second heat exchanger 3b and condensed water W generated after heat exchange with the slurry is discharged from the other end on the shell side. In the heating step, an externally introduced steam S is used as a heating medium introduced into one end on the shell side of the second heat exchanger 3b.

The lower limit of the supply pressure of the externally introduced steam S to the second heat exchanger 3b is preferably 0.4 MPaG, and more preferably 0.5 MPaG. On the other hand, the upper limit of the supply pressure of the externally introduced steam S to the second heat exchanger 3b is preferably 0.7 MPaG, and more preferably 0.6 MPaG. When the supply pressure of the externally introduced steam S to the second heat exchanger 3b is less than the above-mentioned lower limit, the saturation temperature is reduced, and the temperature of the externally introduced steam S cannot be enhanced at the temperature of the separation tank 5 or higher, which might fail to heat the slurry sufficiently. Conversely, when the supply pressure of the externally introduced steam S to the second heat exchanger 3b exceeds the upper limit, the equipment and operating costs might increase.

The lower limit of the supply temperature of the externally introduced steam S to the second heat exchanger 3b is preferably 150°C, and more preferably 155°C. The upper limit of the supply temperature of the externally introduced steam S to the second heat exchanger 3b is preferably 170°C, and more preferably 165°C. When the supply temperature of the externally introduced steam S to the second heat exchanger 3b is lower than the above-mentioned lower limit, the temperature of the externally introduced steam S does not become the temperature within the separation tank 5 or higher, so that the slurry cannot be sufficiently heated. Conversely, when the supply temperature of the externally introduced steam S to the second heat exchanger 3b is higher than the upper limit, the equipment and operating costs might increase.

The lower limit of the pressure in the separation tank 5 is preferably 0.2 MPaG, and more preferably 0.25 MPaG. The upper limit of the pressure in the separation tank 5 is preferably 0.4 MPaG, and more preferably 0.35 MPaG. When the pressure in the separation tank 5 is less than the lower limit, an evaporation rate of the slurry might not be sufficiently improved, and in order to improve the evaporation rate of the slurry, the pressure of the externally introduced steam S needs to be enhanced excessively. Conversely, when the pressure in the separation tank 5 exceeds the upper limit, the equipment cost might increase.

### (Solid-Liquid Separation Step)

The solid-liquid separation step is performed using the solid-liquid separator 4. The solid-liquid separation step removes liquid from the dehydrated slurry obtained after evaporation of moisture in the evaporation step. In detail, the solid-liquid separation step separates oil A from the dehydrated slurry. The oil A is separated from the dehydrated slurry in the solid-liquid separation step, thereby producing a solid (case) B.

The solid B separated in the solid-liquid separation step has its oil further evaporated in a drying step which is separately provided, thereby producing a powdery solid fuel. In this drying step, the outer surfaces of the low-grade coal and the inner surfaces of the pores thereof can be covered with the nonvolatile component. Thus, the powdery solid fuel can be obtained that is prevented from spontaneously combusting.

### (Other Steps)

In addition to the slurry preparation step, the evaporation step, the solid-liquid separation step, and the drying step mentioned above, the method for producing a solid fuel may further include a superheating step of promoting the dehydration of the dehydrated slurry while preventing the decrease in the temperature of the dehydrated slurry obtained in the evaporation step, a compression molding step of compressing and molding the powdery solid fuel obtained in the drying step, and the like.

### <Advantages>

The method for producing a solid fuel includes the step of preheating the slurry in the first circulation route and the step of heating the preheated slurry in the second circulation route that is different from the first circulation route. Thus, the slurry is preheated in the first circulation route, while the slurry obtained after the preheating can be heated in the second circulation route independently of the preheating in the first circulation route. That is, in the method for producing a solid fuel, a part of the slurry is evaporated in the first circulation route, while preventing all of the slurry from passing through the second circulation route, thereby making it possible to promote the optimization of the heat exchange efficiency in respective circulation routes. Therefore, the method for producing a solid fuel can effectively evaporate moisture contained in the slurry.

The method for producing a solid fuel involves using the multitubular heat exchanger in the preheating step and the heating step to supply the heating medium to the shell side and the slurry to the tube side, thereby making it possible to easily and surely preheat and heat the slurry.

The method for producing a solid fuel can use the process steam generated in the evaporation step as the heating medium in the preheating step, thereby effectively utilizing the exhaust heat. The method for producing a solid fuel uses the process steam generated in the evaporation step as the heating medium in the preheating step, and uses the externally introduced steam as the heating medium in the heating step, thereby making it possible to easily and surely enhance the heat exchange rate in the respective circulation routes. With this arrangement, even when the amount of generated process steam is decreased due to an operating trouble or the like, the reduction in the evaporation rate of moisture contained in the slurry can be suppressed because the externally introduced steam is used as the other heating medium.

In the method for producing a solid fuel, the process steam is used as the heating medium in the preheating step, while the externally introduced steam is used as the heating medium in the heating step, thereby making it possible to easily and surely enhance the heat exchange rate between the slurry and the process steam in the preheating step. That is, in the method for producing a solid fuel, the slurry supplied in the preheating step has a certain level of temperature. Thus, the heat exchange between the slurry and the process steam can effectively preheat the slurry and promote the condensation of the process steam. In this way, in the method for producing a solid fuel, the heat exchange rate of the process steam in the preheating step can be enhanced to effectively utilize exhaust heat. In particular, the method for producing a solid fuel adjusts the supply temperature of the slurry to be introduced into the first heat exchanger 3a, the pressure of the compressed process steam pressurized by the compressor 6, and the like within the above-mentioned respective ranges. Thus, the whole condensation of the process steam can be promoted, thereby it is possible to supply the whole volume of the process steam separated by the separation tank 5 to the compressor 6.

In the method for producing a solid fuel, the process steam is compressed, so that the heat exchange rate between the slurry and the process steam in the preheating step can be further enhanced to more effectively utilize exhaust heat. The method for producing a solid fuel can promote the condensation of the process steam in the preheating step, so that an adequate amount of the process steam generated in the evaporation step can be used for the compression. Consequently, the amount of heat exchange between the slurry and process steam can be drastically increased.

The apparatus 1 for producing a solid fuel includes the first heat exchanger 3a for preheating the slurry in the first circulation route and the second heat exchanger 3b for heating the preheated slurry in the second circulation route that is different from the first circulation route. Thus, the slurry is preheated in the first circulation route, while the preheated slurry can be heated in the second circulation route, independently of the preheating in the first circulation route. That is, in the apparatus 1 for producing a solid fuel, a part of the slurry is evaporated in the first circulation route, while preventing all of the slurry from passing through the second circulation route, thereby making it possible to promote the optimization of the heat exchange efficiency in respective circulation routes. Therefore, the apparatus 1 for producing a solid fuel can effectively evaporate moisture contained in the slurry.

The apparatus 1 for producing a solid fuel includes the separation tank 5 for separating the process steam from the heated slurry and the route for supplying the process steam from the separation tank 5 to the first heat exchanger 3a, thereby enabling the effective use of the exhaust heat. The apparatus 1 for producing a solid fuel can enhance the heat exchange rate between the process steam and the slurry while precisely controlling the amount of heat in the process steam.

### [Second Embodiment]

### <Apparatus for Producing Solid Fuel>

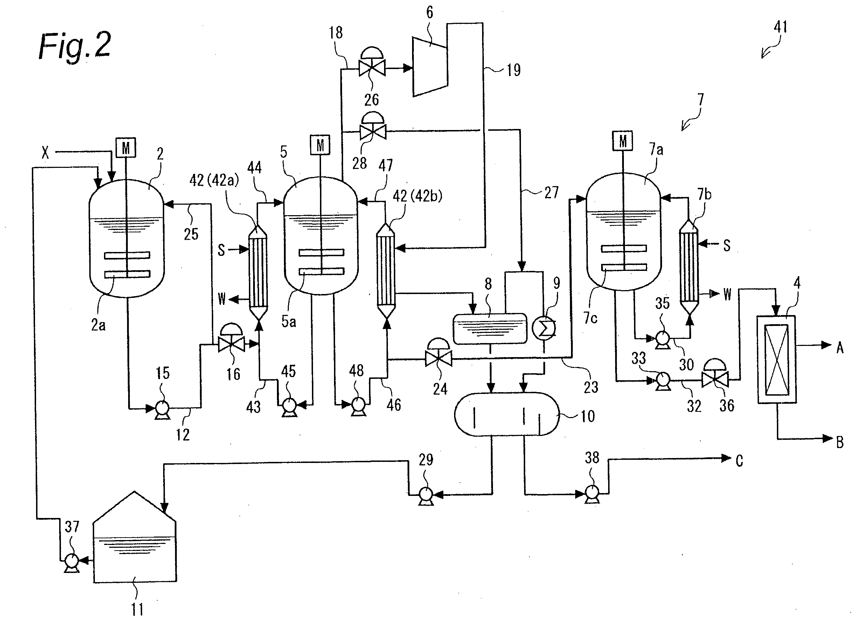

An apparatus 41 for producing a solid fuel shown in Fig. 2 mainly includes the slurry preparation tank 2, a plurality of heaters 42, and the solid-liquid separator 4. The apparatus 41 for producing a solid fuel shown in Fig. 2 is substantially the same as the apparatus 1 for producing a solid fuel shown in Fig. 1 except for the mechanisms for preheating and heating using the heaters 42. Thus, only the structure of the heater 42 and the mechanisms for preheating and heating using the heaters 42 will be described below.

### (Heater)

The plurality of heaters 42 evaporate moisture contained in the slurry prepared in the slurry preparation tank 2. The plurality of heaters 42 include a first heat exchanger 42a that preheats the slurry in a first circulation route, and a second heat exchanger 42b that heats the slurry preheated by the first heat exchanger 42a in a second circulation route that is different from the first circulation route.

The first heat exchanger 42a is a multitubular heat exchanger. One end on the tube side of the first heat exchanger 42a is connected to the bottom of the slurry preparation tank 2 by pipes 12 and 43. One end on the tube side of the first heat exchanger 42a is also connected to the bottom of the separation tank 5 by the pipe 43. The other end on the tube side of the first heat exchanger 42a is connected to an upper part of the side wall of the separation tank 5 by a pipe 44. The first circulation route is formed by the first heat exchanger 42a, the pipe 44 that connects the other end on the tube side of the first heat exchanger 42a with the upper part of the sidewall of the separation tank 5, and the pipe 43 that connects the bottom of the separation tank 5 with one end on the tube side of the first heat exchanger 42a.

The first heat exchanger 42a causes the slurry supplied from the slurry preparation tank 2 to be introduced thereinto from one end on the tube side, and supplies the preheated slurry to the separation tank 5 through the pipe 44 that is connected to the other end on the tube side. The slurry to be supplied to the separation tank 5 is introduced into the first heat exchanger 42a from one end on the tube side by a pump 45 disposed in the pipe 43 on the side of one end.

The first heat exchanger 42a allows externally introduced steam S, introduced from the outside, to be introduced thereinto from one end on the shell side, and discharges condensed water W generated after heat exchange with the slurry, from the other end on the shell side to the outside of the system.

In addition to the slurry supplied from the slurry preparation tank 2, the first heat exchanger 42a allows the slurry supplied from the separation tank 5 to be introduced thereinto from one end on the tube side, thereby appropriately increasing the temperature of the slurry introduced from the one end on the tube side. Thus, the first heat exchanger 42a can sufficiently increase the temperature of the slurry by heat exchange with the externally introduced steam. Consequently, the first heat exchanger 42a supplies a part of the slurry to the separation tank 5 through the pipe 44, and thereby enables the part of the slurry to be evaporated within the separation tank 5.

The second heat exchanger 42b is a multitubular heat exchanger. One end on the tube side of the second heat exchanger 42b is connected to the bottom of the separation tank 5 by a pipe 46. The other end on the tube side of the second heat exchanger 42b is connected to the upper part of the side wall of the separation tank 5 by a pipe 47. The second circulation route is formed by the second heat exchanger 42b, the pipe 47 that connects the other end on the tube side of the second heat exchanger 42b with the upper part of the sidewall of the separation tank 5, the separation tank 5, and the pipe 46 that connects the bottom of the separation tank 5 with one end on the tube side of the second heat exchanger 42b.

The second heat exchanger 42b allows the slurry, which is to be supplied to the separation tank 5, to be introduced thereinto from end on the tube side by a pump 48 disposed in the pipe 46. The second heat exchanger 42b supplies the heated slurry to the separation tank 5 from the other end on the tube side through the pipe 47 that connects the other end on the tube side with the upper part of the side wall of the separation tank 5.

The second heat exchanger 42b allows process steam, which is to be recovered from the upper part of the separation tank 5, to be introduced thereinto as a heating medium from one end on the shell side. Concurrently, the second heat exchanger 42b discharges a condensate liquid of the process steam generated by heat exchange with the slurry introduced into the tube side, from the other end on the shell side into the condensate reservoir 8. Specifically, the upper part of the separation tank 5 is connected to one end on the shell side of the second heat exchanger 42b by the pipes 18 and 19. With this arrangement, the process steam separated by the separation tank 5 is introduced into one end on the shell side through the pipes 18 and 19. The pipes 18 and 19 define a route for supplying the process steam from the separation tank 5 to the second heat exchanger 42b.

The second heat exchanger 42b allows the slurry supplied from the separation tank 5 to be introduced thereinto from one end on the tube side, thereby sufficiently increasing the temperature of the slurry introduced from the one end on the tube side. Thus, the slurry introduced into the second heat exchanger 42b exchanges heat with the process steam at the second heat exchanger 42b, and thereby evaporates sufficiently within the separation tank 5

### <Method for Producing Solid Fuel>

A method for producing a solid fuel using an apparatus 41 for producing a solid fuel shown in Fig. 2 will be described below. The method for producing a solid fuel includes the steps of: preparing a slurry by mixing powdery low-grade coal and oil; evaporating moisture contained in the slurry by heating; and separating the slurry obtained after the evaporation into solid and liquid. The slurry preparation step and the solid-liquid separation step in the method for producing a solid fuel using the apparatus 41 for producing a solid fuel are the same as those in the method for producing a solid fuel using the apparatus 1 for producing a solid fuel shown in Fig. 1, and a description thereof will be omitted below.

### (Preheating Step)

In the preheating step, the above-mentioned slurry mixed in the slurry preparation step and the slurry fed from the bottom of the separation tank 5 through the pipe 43 are introduced into the first heat exchanger 42a from one end on the tube side of the first heat exchanger 42a and supplied from the other end on the tube side to the separation tank 5. Concurrently, in the preheating step, a heating medium is introduced into the first heat exchanger 42a from its one end on the shell side and condensed by the heat exchange with the slurry to produce the condensed water W, which is then discharged from the other end on the shell side. The heating medium in use introduced into one end on the shell side of the first heat exchanger 42a is externally introduced steam S.

The lower limit of the supply pressure of the externally introduced steam S to the first heat exchanger 42a is preferably 0.4 MPaG, and more preferably 0.5 MPaG. The upper limit of the supply pressure of the externally introduced steam S to a first heat exchanger 32a is preferably 0.7 MPaG, and more preferably 0.6 MPaG. When the supply pressure of the externally introduced steam S to the first heat exchanger 32a is less than the above-mentioned lower limit, the saturation temperature is reduced, and the temperature of the externally introduced steam S cannot be increased to the temperature of the separation tank 5 or higher, which might fail to heat the slurry sufficiently. Conversely, when the supply pressure of the externally introduced steam S to the first heat exchanger 32a exceeds the upper limit, the equipment and operating costs might increase.

The lower limit of the supply temperature of the externally introduced steam S to the first heat exchanger 32a is preferably 150°C, and more preferably 155°C. On the other hand, the upper limit of the supply temperature of the externally introduced steam S to the first heat exchanger 32a is preferably 170°C, and more preferably 165°C. When the supply temperature of the externally introduced steam S to the first heat exchanger 32a is lower than the above-mentioned lower limit, the temperature of the externally introduced steam S does not become the temperature within the separation tank 5 or higher, so that the slurry cannot be sufficiently heated. Conversely, when the supply temperature of the externally introduced steam S to the first heat exchanger 32a is higher than the upper limit, the equipment and operating costs might increase.

Note that the supply temperature of the slurry to the first heat exchanger 42a in the preheating step can be set at the same level as that in the method for producing a solid fuel using the apparatus 1 for producing a solid fuel shown in Fig. 1.

### (Heating Step)

In the heating step, the above-mentioned slurry supplied from the bottom of the separation tank 5 is introduced into the second heat exchanger 42b from one end on the tube side of the second heat exchanger 42b, and supplied from the other end on the tube side to the separation tank 5. Concurrently, in the heating step, a heating medium is introduced into the second heat exchanger 42b from one end on the shell side of the second heat exchanger 42b and condensed liquid generated after heat exchange with the slurry is discharged from the other end on the shell side. The heating medium in use introduced into the one end on the shell side of the second heat exchanger 42b is process steam supplied thereto from the upper part of the separation tank 5 through the pipes 18 and 19. In detail, the above process steam in use introduced into one end on the shell side of the second heat exchanger 42b is a compressed process steam that is compressed by the compressor 6 coupled to the pipes 18 and 19.

The lower limit of the pressure of the compressed process steam is preferably 0.5 MPaG, more preferably 0.53 MPaG, and further preferably 0.55 MPaG. On the other hand, the upper limit of the pressure of the compressed process steam is preferably 0. 65 MPaG, more preferably 0. 62 MPaG, and further preferably 0. 6 MPaG. When the pressure of the compressed process steam is less than the lower limit, the process steam might not sufficiently exchange heat with the slurry introduced from one end on the tube side of the second heat exchanger 42b. Conversely, when the pressure of the compressed process steam exceeds the upper limit, the equipment and operating costs might increase.

The lower limit of the temperature of the compressed process steam is preferably 185°C, and more preferably 190°C. On the other hand, the upper limit of the temperature of the compressed process steam is preferably 205°C, and more preferably 200°C. When the temperature of the compressed process steam is lower than the lower limit, the process steam might not sufficiently exchange heat with the slurry introduced from one end on the tube side of the second heat exchanger 42b. Conversely, when the temperature of the compressed process steam is higher than the upper limit, the equipment and operating costs might increase.

Note that the pressure within the separation tank 5 can be set at the same level as that in the method for producing a solid fuel using the apparatus 1 for producing a solid fuel shown in Fig. 1.

### <Advantages>

The method for producing a solid fuel can use the process steam generated in the evaporation step as the heating medium in the heating step, thereby making it possible to effectively utilize the exhaust heat. The method for producing a solid fuel uses the process steam generated in the evaporation step as the heating medium in the heating step, and uses the externally introduced steam as the heating medium in the preheating step, thereby making it possible to enhance the heat exchange rate between the process steam and the slurry while precisely controlling the amount of heat of the process steam. With this arrangement, even when the amount of generated process steam is decreased due to an operating trouble or the like, the reduction in the evaporation rate of moisture contained in the slurry can be suppressed because the externally introduced steam is used as the other heating medium.

The apparatus 41 for producing a solid fuel includes the separation tank 5 for separating the process steam from the heated slurry and the route for supplying the process steam from the separation tank 5 to the second heat exchanger 42b, thereby making it possible to enhance the heat exchange rate between the process steam and the slurry while precisely controlling the amount of heat of the process steam.

### [Other Embodiments]

It should be noted that various modifications and changes can be made to the above-mentioned embodiments when implementing the method for producing a solid fuel and the apparatus for producing a solid fuel according to the present invention. For example, the plurality of heaters in use may be three or more heat exchangers, each having an independent circulation route. In the method for producing a solid fuel and the apparatus for producing a solid fuel, the use of three or more heat exchangers in this way can further increase the process amount of evaporation of the slurry. When using three or more heat exchangers in this way, process steam is preferably used as the heating medium for at least one heat exchanger.

The method for producing a solid fuel and the apparatus for producing a solid fuel may not necessarily use process steam as the heating medium in the preheating step or the heating step as long as the slurry is preheated in the first circulation route, while the preheated slurry is heated in the second circulation route that is different from the first circulation route. Even when using the process steam in the preheating step or the heating step, the process steam is not necessarily compressed.

Furthermore, the heat exchanger used in the method for producing a solid fuel and the apparatus for producing a solid fuel is not necessarily a multitubular heat exchanger.

The dehydrated slurry in the separation tank is not necessarily supplied from the first circulation route to the superheater, and may be supplied from the second circulation route to the superheater.

### [EXAMPLES]

The present invention will be described in more detail below by way of Examples, but the present invention is not limited to the following Examples.

### (Example 1)

The apparatus 1 for producing a solid fuel shown in Fig. 1 was used to mix a low-grade coal and kerosene in the slurry preparation tank 2, thereby producing a slurry. The slurry was supplied to one end on the tube side of the first heat exchanger 3a. Concurrently, a slurry fed from the bottom of the separation tank 5 was also supplied to the one end on the tube side of the first heat exchanger 3a, together with the slurry prepared in the slurry preparation tank 2. The temperature of the slurry supplied to the first heat exchanger 3a was 65°C. The compressed process steam separated in the separation tank 5 and pressurized by the compressor 6 was supplied to one end on the shell side of the first heat exchanger 3a. The pressure and temperature of the compressed process steam pressurized by the compressor 6 were 0.58 MPaG and 193°C, respectively.

The slurry fed from the bottom of the separation tank 5 was supplied to one end on the tube side of the second heat exchanger 3b. The temperature of the slurry supplied to the second heat exchanger 3b was 148°C. On the other hand, externally introduced steam was supplied to the second heat exchanger 3b from one end on the shell side of the second heat exchanger 3b. The supply pressure and supply temperature of the externally introduced steam were 0.6 MPaG and 160°C, respectively. The temperature of the slurry fed from the other end on the tube side of the second heat exchanger 3b to the separation tank 5 was 146°C. Note that the pressure in the separation tank 5 was adjusted to be held at 0.30 MPaG.

### (Example 2)

The apparatus 41 for producing a solid fuel shown in Fig. 2 was used to mix a low-grade coal and kerosene in the slurry preparation tank 2, thereby producing a slurry. The slurry was supplied to one end on the tube side of the first heat exchanger 42a. Concurrently, a slurry fed from the bottom of the separation tank 5 was also supplied to the one end on the tube side of the first heat exchanger 42a, together with the slurry prepared in the slurry preparation tank 2. The temperature of the slurry supplied to the first heat exchanger 42a was 65°C. On the other hand, externally introduced steam was supplied to the first heat exchanger 42a from one end on the shell side of the first heat exchanger 42a. The supply pressure and supply temperature of the externally introduced steam were 0.6 MPaG and 160°C, respectively.

The slurry fed from the bottom of the separation tank 5 was supplied to one end on the tube side of the second heat exchanger 42b. The temperature of the slurry supplied to the second heat exchanger 42b was 148°C. On the other hand, the compressed process steam separated in the separation tank 5 and pressurized by the compressor 6 was supplied to one end on the shell side of the second heat exchanger 42b. The pressure and temperature of the compressed process steam pressurized by the compressor 6 were 0. 60 MPaG and 200°C, respectively. The temperature of the slurry fed from the other end on the tube side of the second heat exchanger 42b to the separation tank 5 was 150°C. Note that the pressure in the separation tank 5 was adjusted to be held at 0.30 MPaG.

### [Evaluation of Heat Conductivity of First Heat Exchanger]

In Example 1, the process steam supplied to one end on the shell side of the first heat exchanger 3a was condensed completely by the heat exchanger 3a. In this way, the whole process steam was able to be supplied to the compressor 6. Furthermore, the amount of heat exchange by the first heat exchanger 3a in Example 1 was increased by 30% compared to that by the first heat exchanger 42a in Example 2.

### [Evaluation of Heat Conductivity of Second Heat Exchanger]

In the second heat exchanger 3b of Example 1, the supply temperature and the discharge temperature of the slurry were increased as a whole, whereby heat of the externally introduced steam was used as latent heat rather than sensible heat. Even a small difference in the temperature increased the amount of heat exchange. Specifically, a heat-transfer coefficient in the second heat exchanger 3b of Example 1 was increased by about 50% compared to that in the second heat exchanger 42b of Example 2.

The present application claims priority to Japanese Patent Application No. 2014-248405 filed on December 8, 2014, the disclosure of which is incorporated herein by reference in its entirety.

### Industrial Applicability

As mentioned above, the method for producing a solid fuel and the apparatus for producing a solid fuel according to the present invention can effectively evaporate moisture contained in a slurry by enhancing the heat exchange efficiency, thereby more efficiently producing a solid fuel at low cost with high efficiency.

### [Description of Reference Numerals]

1 Apparatus for producing solid fuel
2 Slurry preparation tank
2a, 5a, 7c Stirrer
3 Heater
3a First heat exchanger
3b Second heat exchanger
4 Solid-Liquid separator
5 Separation tank
6 Compressor
7 Superheater
7a Superheating tank
7b Third heat exchanger
8 Condensate reservoir
9 Condenser
10 Oil-water separator
11 Tank
12, 13, 14, 18, 19, 20, 21, 23, 25, 27, 30, 31, 32 Pipe
15, 17, 22, 29, 33, 35, 37, 38 Pump
16, 24, 26, 28, 36 Control valve
41 Apparatus for producing solid fuel
42 Heater
42a First heat exchanger
42b Second heat exchanger
43, 44, 46, 47 Pipe
45, 48 Pump
A Oil
B Solid
C Wastewater
S Externally introduced steam
X Low-grade coal
W Condensed water

## Claims

1. A method for producing a solid fuel, comprising the steps of:
preparing a slurry by mixing powdery low-grade coal and oil;
evaporating moisture contained in the slurry by heating; and
separating the slurry obtained after the evaporation step into solid and liquid,
wherein the evaporation step includes the steps of:
preheating the slurry in a first circulation route; and
heating the preheated slurry in a second circulation route that is different from the first circulation route.

2. The method for producing a solid fuel according to claim 1, wherein, in the preheating step and the heating step, a multitubular heat exchanger is used, a heating medium is supplied to a shell side, and the slurry is supplied to a tube side.

3. The method for producing a solid fuel according to claim 1 or 2, wherein process steam generated in the evaporation step is used as the heating medium for any one of the preheating step and the heating step, and externally introduced steam is used as a heat medium for the other.

4. The method for producing a solid fuel according to claim 3, wherein the heating medium in the preheating step is the process steam and the heating medium in the heating step is the externally introduced steam.

5. The method for producing a solid fuel according to claim 4, wherein the process steam is compressed.

6. An apparatus for producing a solid fuel, comprising:
a slurry preparation tank for mixing powdery low-grade coal and oil;
a plurality of heaters for evaporating moisture contained in the slurry; and
a solid-liquid separator that removes a liquid from the slurry obtained after the evaporation of the moisture,
wherein the plurality of heaters includes:
a first heat exchanger for preheating the slurry in a first circulation route, and
a second heat exchanger for heating the preheated slurry in a second circulation route that is different from the first circulation route.

7. The apparatus for producing a solid fuel according to claim 6, further comprising:
a separation tank for separating process steam from the heated slurry, and
a route for supplying the process steam from the separation tank to the first heat exchanger or the second heat exchanger.
